# FASCICULE DE BREVET EUROPEEN

(11) **EP 2 160 275 B1**
(45) Date de publication et mention de la délivrance du brevet: **25.04.2012**
(21) Numéro de dépôt: 08806114.8
(22) Date de dépôt: 27.06.2008
(51) Int. Cl.: B29B 15/10, C08J 5/04, C08L 27/22, C08L 27/16, D06M 15/263, D06M 23/08

(54) **PROCÉDÉ D'IMPRÉGNATION DE FIBRES CONTINUES PAR UNE MATRICE POLYMÉRIQUE COMPOSITE RENFERMANT UN POLYMÈRE FLUORÉ GREFFÉ**
VERFAHREN ZUR IMPRÄGNIERUNG DURCHGEHENDER FASERN MIT EINER VERBUNDPOLYMERMATRIX MIT EINEM GEPFROPFTEN UND FLUORINIERTEN POLYMER
METHOD FOR IMPREGNATING CONTINUOUS FIBRES WITH A COMPOSITE POLYMER MATRIX CONTAINING A GRAFTED FLUORINATED POLYMER

(30) Priorité: 27.06.2007 FR 0704617
(43) Date de publication de la demande: 10.03.2010
(73) Titulaire: ARKEMA FRANCE, 92700 Colombes (FR)
(72) Inventeur: HOCHSTETTER, Gilles, F-27300 Bernay (FR); WERTH, Michael, F-27300 Bernay (FR)
(74) Mandataire: Bonnel, Claudine
(86) Numéro de dépôt international: PCT/FR2008/051186
(87) Numéro de publication internationale: WO 2009/007616

(56) Documents cités:
- EP-A- 0 347 826
- WO-A-2006/045636
- US-A- 3 779 854

## Description

La présente invention concerne un procédé d'imprégnation de fibres continues, comprenant l'enrobage desdites fibres par une matrice polymérique comprenant :
(a) au moins un polymère fluoré greffé par au moins une fonction polaire carboxylique et (b) éventuellement au moins un polymère fluoré non greffé. Elle concerne également les fibres composites susceptibles d'être obtenues selon ce procédé, ainsi que leurs utilisations.

Les matériaux composites font l'objet de recherches intensives, dans la mesure où ils présentent de nombreux avantages fonctionnels (légèreté, résistance mécanique et chimique, liberté de formes) leur permettant de se substituer au métal dans des applications très diverses.

On a ainsi recours depuis quelques années à des fibres composites pour fabriquer, notamment, diverses pièces aéronautiques ou automobiles. Ces fibres composites qui se caractérisent par de bonnes résistances thermomécanique et chimique sont constituées d'un renfort filamentaire formant armature, destiné à assurer la tenue mécanique du matériau, et d'une matrice liant et enrobant les fibres renforts, destinée à répartir les efforts (résistance à la flexion ou à la compression), à conférer une protection chimique au matériau et à lui donner sa forme.

Les procédés de fabrication de pièces composites à partir de ces fibres enrobées comprennent diverses techniques telles que, par exemple, le moulage au contact, le moulage par projection, le drapage autoclavé ou le moulage basse pression.

Une technique pour réaliser des pièces creuses est celle dite de l'enroulement filamentaire, qui consiste à imprégner des fibres sèches d'une résine puis à les enrouler sur un mandrin formé d'armatures et de forme adaptée à la pièce à fabriquer. La pièce obtenue par enroulement est ensuite durcie par chauffage.

On utilise actuellement dans les procédés d'enroulement filamentaire des compositions d'enrobage constituées soit de matrices polymériques renfermant des polymères thermodurcissables, soit de matrices polymériques contenant des polymères thermoplastiques du type polyètheréther cétone (PEEK), poly(sulfure de phénylène) (PPS) ou polyphénylsulfone (PPSU), par exemple.

Les matériaux thermoplastiques présentent l'avantage d'être plus faciles à thermoformer et de permettre la réalisation des pièces composites ayant une diversité de formes. L'utilisation de ces matériaux est toutefois onéreuse du fait de leur coût. En outre, ils posent des problèmes de mise en oeuvre en raison de la difficulté à les faire fondre au-dessous de 200°C, ce qui affecte également l'économie du procédé puisqu'ils nécessitent une température de consolidation du composite relativement élevée nécessitant un apport n'énergie important.

Les documents EP 0 347 826 et US 3,779,854 divulguent par ailleurs des compositions d'enrobage des fibres continues à base de polymères fluorés tels que le PVDF. Ces compositions présentent toutefois une résistance au fluage à chaud insuffisante.

Or, il est apparu à la Demanderesse, après de nombreuses recherches, qu'il était possible de proposer un procédé d'enrobage de fibres continues plus économique que les procédés connus, tout en permettant l'obtention de fibres composites présentant des propriétés mécaniques, et en particulier une résistance au fluage à chaud, adaptées notamment aux applications aéronautiques et automobiles, en substituant aux polymères thermoplastiques précités des polymères thermoplastiques semi-cristallins ayant une température de transition vitreuse inférieure à 100°C mélangés à des nanotubes, notamment de carbone.

Cependant, il a été observé que les polymères fluorés présentent des problèmes de compatibilité avec les fibres continues auxquelles ils sont censés adhérer. Les interfaces entre le polymère fluoré et les fibres continues manquent par conséquent de cohésion, ce qui entraîne l'apparition de points faibles à l'échelle macroscopique lorsque la matrice polymérique est soumise à une sollicitation. Il a en outre été démontré que la présence des nanotubes de carbone dans la matrice polymérique utilisée comme matériau d'enrobage des fibres continues affectait négativement la résistance à la traction à température ambiante du matériau d'enrobage, dans le cas où la matrice comprenait un polymère fluoré. Enfin, la dispersion des nanotubes dans le polymère fluoré n'est pas toujours satisfaisante, ce qui peut conduire à la formation d'agglomérats préjudiciables aux propriétés recherchées pour le composite.

Il subsiste par conséquent le besoin de disposer d'un procédé économique de fabrication de fibres composites cohésives et homogènes, présentant des propriétés mécaniques optimales pour une utilisation dans la fabrication de pièces pour l'aéronautique, l'aérospatiale ou l'automobile.

La Demanderesse a découvert que ce besoin pouvait être satisfait par l'utilisation comme matériau d'enrobage d'un polymère fluoré greffé par au moins une fonction polaire carboxylique, éventuellement mélangé à un polymère fluoré non greffé et/ou à des nanotubes, notamment de carbone.

Un tel polymère fluoré greffé a déjà été décrit dans la demande WO 2006/045636 en tant que constituant de la couche intérieure d'un tube. Il n'a toutefois jamais été suggéré, à la connaissande de la Demanderesse, de l'utiliser dans une composition de revêtement de fibres continues.

La présente invention a plus précisément pour objet un procédé d'imprégnation de fibres continues, comprenant l'enrobage desdites fibres par une matrice polymérique comprenant : (a) au moins un polymère fluoré greffé par au moins une fonction polaire carboxylique et (b) éventuellement au moins un polymère fluoré non greffé.

Elle a également pour objet les fibres composites susceptibles d'être obtenues selon ce procédé.

En préambule, il est précisé que dans l'ensemble de cette description, l'expression "compris(e) entre" doit être interprétée comme incluant les bornes citées.

Le procédé selon l'invention porte donc sur l'imprégnation de fibres continues.

Des exemples de matériaux constitutifs desdites fibres comprennent, sans limitation :
- les fibres de polymère étiré, à base notamment :
   de polyamide tel que le polyamide 6 (PA-6), le polyamide 11 (PA-11), le polyamide 12 (PA-12), le polyamide 6.6 (PA-6.6), le polyamide 4.6 (PA-4.6), le polyamide 6.10 (PA-6.10) ou le polyamide 6.12 (PA-6.12), de copolymère bloc polyamide/polyéther (Pebax^{®}), de polyéthylène haute densité de polypropylène ou de polyester tel que les polyhydroxyalcanoates et les polyesters commercialisés par DU PONT sous la dénomination commerciale Hytrel^{®} ;
- les fibres de carbone ;
- les fibres de verre, notamment de type E, R ou S2 ;
- les fibres d'aramide (Kevlar^{®}) ;
- les fibres de bore ;
- les fibres de silice ;
- les fibres naturelles telles que le lin, le chanvre ou le sisal ; et
- leurs mélanges, tels que les mélanges de fibres de verre, carbone et aramide.

La composition d'enrobage mise en oeuvre selon la présente invention est une matrice polymérique renfermant notamment au moins un polymère fluoré greffé par une fonction polaire carboxylique (ci-après désigné pour plus de simplicité par « polymère fluoré greffé »).

Ce polymère fluoré greffé est susceptible d'être obtenu par greffage d'au moins un monomère polaire carboxylique, portant par exemple au moins une fonction acide ou anhydride carboxylique sur un polymère fluoré.

Plus précisément, ce polymère fluoré greffé peut être préparé selon un procédé comprenant : (a) le mélange, de préférence à l'état fondu, par exemple au moyen d'une extrudeuse ou d'un malaxeur, d'un polymère fluoré avec un monomère polaire portant une fonction acide ou anhydride carboxylique, (b) la transformation éventuelle de ce mélange en granulés, poudre, film ou plaque, (c) l'irradiation de ce mélange, éventuellement en l'absence d'oxygène (et par exemple dans des sacs de polyéthylène) sous une dose allant de 1 à 15 Mrad d'irradiation photonique ou électronique, pour réaliser le greffage du monomère polaire sur le polymère fluoré, et (d) éventuellement l'élimination du monomère polaire résiduel n'ayant pas réagi avec le polymère fluoré. Un procédé de préparation de ce type est notamment décrit dans la demande EP-1 484 346.

Des exemples de polymères fluorés utilisables dans la fabrication du polymère fluoré greffé comprennent, sans limitation :
- le poly(fluorure de vinylidène) (PVDF), de préférence sous forme α,
- les copolymères de fluorure de vinylidène avec par exemple l'hexafluoropropylène (HFP), le chlorotrifluoroéthylène (CTFE), l'hexafluoropropylène (HFP), le trifluoroéthylène (VF3) et le tétrafluoroéthylène (TFE),
- les homo- et copolymères de trifluoroéthylène (VF3),
- les copolymères fluoroéthylène / propylène (FEP),
- les copolymères d'éthylène avec le fluoroéthylène/propylène (FEP), le tétrafluoroéthylène (TFE), le perfluorométhylvinyl éther (PMVE), le chlorotrifluoroéthylène (CTFE) ou l'hexafluoropropylène (HFP), et
- leurs mélanges,
   certains de ces polymères étant notamment commercialisés par la société ARKEMA sous la dénomination Kynar^{®}.

Selon une forme d'exécution préférée de l'invention, le polymère fluoré utilisé pour la fabrication du polymère fluoré greffé est un homopolymère de VDF, encore désigné par PVDF.

Comme monomères polaires portant une fonction carboxylique, on peut notamment citer les mono- et diacides carboxyliques insaturés ayant de 2 à 20 atomes de carbone, et en particulier de 4 à 10 atomes de carbone, tels que les acides acrylique, méthacrylique, maléique, fumarique, itaconique, citraconique, allylsuccinique, cyclohex-4-ène-1,2-dicarboxylique, 4-méthyl-cyclohex-4-ène-1,2-dicarboxylique, bicyclo (2,2,1)hept-5-ène-2,3-dicarboxylique, x-méthyl bicyclo (2,2,1)hept-5-ène-2,3-dicarboxylique et undécylénique, ainsi que leurs anhydrides.

Le polymère fluoré greffé est donc susceptible d'être obtenu à partir de l'un au moins de ces monomères. On préfère que ce polymère fluoré soit greffé par l'anhydride maléique.

La proportion en poids du polymère fluoré au monomère polaire utilisés dans la fabrication du polymère fluoré greffé va habituellement de 90:10 à 99,9:0,1.

Un tel polymère fluoré greffé est notamment disponible auprès de la société ARKEMA sous la dénomination commerciale Kynar^{®} ADX 710, 711, 720 ou 721.

La matrice polymérique mise en oeuvre selon l'invention peut renfermer, outre le polymère fluoré greffé mentionné ci-dessus, au moins un polymère fluoré non greffé, qui peut notamment être choisi parmi les polymères fluorés cités précédemment.

Selon une forme d'exécution préférée de l'invention, ce polymère, lorsqu'il est présent, est un homopolymère de VDF (PVDF) ou un copolymère VDF/HFP renfermant de préférence au moins 50% en poids de motifs VDF.

Les polymères fluorés non greffés préférés sont ceux de grade convenant à l'injection ou à l'extrusion et ayant de préférence une viscosité allant de 100 à 2000 Pa.s et plus préférentiellement de 300 à 1200 Pa.s, mesurée à 230°C sous un gradient de cisaillement de 100 s⁻¹ à l'aide d'un rhéomètre capillaire. Des exemples de PVDF sont commercialisés par la société ARKEMA sous les dénominations commerciales Kynar^{®} 710, 711 et 720 (de grade injection) ou Kynar^{®} 740, 760, 50HD et 400HD (de grade extrusion). Des exemples de copolymères VDF/HFP sont commercialisés par la société ARKEMA sous les dénominations commerciales Kynar^{®} 2800 et 3120-50.

Le rapport en poids du polymère fluoré greffé à la matrice polymérique peut aller de 5 à 100% et est de préférence compris entre 10 et 50%.

Le polymère fluoré et le polymère fluoré greffé peuvent être mélangés soit à l'état de poudre, soit par compoundage suivi d'une granulation et d'un broyage des granulés.

En plus du ou des polymères fluorés greffé(s) et éventuellement non greffé(s) décrits précédemment, la matrice polymérique peut renfermer au moins un renfort, choisi notamment parmi : les nanotubes d'au moins un élément chimique choisi parmi les éléments des colonnes IIIa, IVa et Va du tableau périodique ; le noir de carbone ; les fibres de verre, de bore, de silice, d'aramide, de polymère étiré (en particulier de polyamide, de polyoléfine ou de polyester) et/ou les fibres naturelles telles que le lin, le chanvre et/ou le sisal; et leurs mélanges.

Les nanotubes sont préférés pour une utilisation dans la présente invention. Ces nanotubes peuvent être à base de carbone, de bore, de phosphore et/ou d'azote (borures, nitrures, carbures, phosphures) et par exemple constitué de nitrure de carbone, de nitrure de bore, de carbure de bore, de phosphure de bore, de nitrure de phosphore ou de boronitrure de carbone. Les nanotubes de carbone (ci-après, NTC) sont préférés pour une utilisation dans la présente invention.

Les nanotubes utilisables selon l'invention peuvent être du type monoparoi, à double paroi ou à parois multiples. Les nanotubes à double paroi peuvent notamment être préparés comme décrit par FLAHAUT et al dans Chem. Com. (2003), 1442. Les nanotubes à parois multiples peuvent de leur côté être préparés comme décrit dans le document WO 03/02456.

Les nanotubes ont habituellement un diamètre moyen allant de 0,1 à 200 nm, de préférence de 0,1 à 100 nm, plus préférentiellement de 0,4 à 50 nm et, mieux, de 1 à 30 nm et avantageusement une longueur de 0,1 à 10 µm. Leur rapport longueur/diamètre est de préférence supérieur à 10 et le plus souvent supérieur à 100. Leur surface spécifique est par exemple comprise entre 100 et 300 m²/g et leur densité apparente peut notamment être comprise entre 0,05 et 0,5 g/cm³ et plus préférentiellement entre 0,1 et 0,2 g/cm³. Les nanotubes multiparois peuvent par exemple comprendre de 5 à 15 feuillets et plus préférentiellement de 7 à 10 feuillets.

Un exemple de nanotubes de carbone bruts est notamment disponible dans le commerce auprès de la société ARKEMA sous la dénomination commerciale Graphistrength^{®} C100.

Ces nanotubes peuvent être purifiés et/ou oxydés et/ou broyés et/ou fonctionnalisés, avant leur mise en oeuvre dans le procédé selon l'invention.

Le broyage des nanotubes peut être notamment effectué à froid ou à chaud et être réalisé selon les techniques connues mises en oeuvre dans des appareils tels que broyeurs à boulets, à marteaux, à meules, à couteaux, à jet de gaz ou tout autre système de broyage susceptible de réduire la taille du réseau enchevêtré de nanotubes. On préfère que cette étape de broyage soit pratiquée selon une technique de broyage par jet de gaz et en particulier dans un broyeur à jet d'air.

La purification des nanotubes bruts ou broyés peut être réalisée par lavage à l'aide d'une solution d'acide sulfurique, de manière à les débarrasser d'éventuelles impuretés minérales et métalliques résiduelles, provenant de leur procédé de préparation. Le rapport pondéral des nanotubes à l'acide sulfurique peut notamment être compris entre 1 :2 et 1 :3. L'opération de purification peut par ailleurs être effectuée à une température allant de 90 à 120°C, par exemple pendant une durée de 5 à 10 heures. Cette opération peut avantageusement être suivie d'étapes de rinçage à l'eau et de séchage des nanotubes purifiés.

L'oxydation des nanotubes est avantageusement réalisée en mettant ceux-ci en contact avec une solution d'hypochlorite de sodium renfermant de 0,5 à 15% en poids de NaOCl et de préférence de 1 à 10% en poids de NaOCl, par exemple dans un rapport pondéral des nanotubes à l'hypochlorite de sodium allant de 1:0,1 à 1:1. L'oxydation est avantageusement réalisée à une température inférieure à 60°C et de préférence à température ambiante, pendant une durée allant de quelques minutes à 24 heures. Cette opération d'oxydation peut avantageusement être suivie d'étapes de filtration et/ou centrifugation, lavage et séchage des nanotubes oxydés.

La fonctionnalisation des nanotubes peut être réalisée par greffage de motifs réactifs tels que des monomères vinyliques à la surface des nanotubes. Le matériau constitutif des nanotubes est utilisé comme initiateur de polymérisation radicalaire après avoir été soumis à un traitement thermique à plus de 900°C, en milieu anhydre et dépourvu d'oxygène, qui est destiné à éliminer les groupes oxygénés de sa surface. Il est ainsi possible de polymériser du méthacrylate de méthyle ou du méthacrylate d'hydroxyéthyle à la surface de nanotubes de carbone en vue de faciliter notamment leur dispersion dans le PVDF ou les polyamides.

On utilise de préférence dans la présente invention des nanotubes bruts éventuellement broyés, c'est-à-dire des nanotubes qui ne sont ni oxydés ni purifiés ni fonctionnalisés et n'ont subi aucun autre traitement chimique.

Les nanotubes peuvent représenter de 0,5 à 30% et de préférence de 0,5 à 10%, et encore plus préférentiellement de 1 à 5% du poids de la matrice polymérique.

Lorsqu'ils sont présents, on préfère que les nanotubes soient mélangés au polymère fluoré greffé et au polymère fluoré non greffé éventuellement présent par compoundage à l'aide de dispositifs usuels tels que des extrudeuses bi-vis ou des co-malaxeurs. Dans ce procédé, des granulés de polymère(s) sont typiquement mélangés à l'état fondu avec les nanotubes.

En variante, les nanotubes peuvent être dispersés par tout moyen approprié dans le(s) polymère(s) se trouvant en solution dans un solvant. Dans ce cas, la dispersion peut être améliorée, selon une forme d'exécution avantageuse de la présente invention, par l'utilisation de systèmes de dispersion ou d'agents dispersants particulier.

Ainsi, le procédé selon l'invention peut comprendre une étape préliminaire de dispersion des nanotubes dans la matrice polymérique au moyen d'ultrasons ou d'un système rotor-stator.

Un tel système rotor-stator est notamment commercialisé par la société SILVERSON sous la dénomination commerciale Silverson^{®} L4RT. Un autre type de système rotor-stator est commercialisé par la société IKA-WERKE sous la dénomination commerciale Ultra-Turrax^{®}.

D'autres systèmes rotor-stator encore sont constitués des moulins colloïdaux, des turbines défloculeuses et des mélangeurs à fort cisaillement de type rotor-stator, tels que les appareils commercialisés par la société IKA-WERKE ou par la société ADMIX.

Les agents dispersants peuvent être notamment choisis parmi les plastifiants qui peuvent être eux-mêmes choisis dans le groupe constitué :
- des alkylesters de phosphates, d'acide hydroxybenzoïque (dont le groupe alkyle, de préférence linéaire, renferme de 1 à 20 atomes de carbone), d'acide laurique, d'acide azélaïque ou d'acide pélargonique,
- des phtalates, notamment de dialkyle ou d'alkyl-aryle, en particulier d'alkylbenzyle, les groupes alkyles, linéaires ou ramifiés, renfermant indépendamment de 1 à 12 atomes de carbone,
- des adipates, notamment de dialkyles,
- des sébacates, notamment de dialkyles et en particulier de dioctyle, en particulier dans le cas où la matrice polymérique contient un fluoropolymère,
- des benzoates de glycols ou de glycérol,
- des éthers de dibenzyle,
- des chloroparaffines,
- du carbonate de propylène,
- des sulfonamides, en particulier dans le cas où la matrice polymérique contient un polyamide, et notamment des aryl sulfonamides dont le groupe aryle est éventuellement substitué par au moins un groupe alkyle contenant de 1 à 6 atomes de carbone, telles que les benzene sulfonamides et les toluene sulfonamides, qui peuvent être N-substituées ou N,N-disubstituées par au moins un groupe alkyle, de préférence linéaire, renfermant de 1 à 20 atomes de carbone,
- des glycols, et
- de leurs mélanges.

En variante, l'agent dispersant peut être un copolymère comprenant au moins un monomère hydrophile anionique et au moins un monomère incluant au moins un cycle aromatique, tels que les copolymères décrits dans le document FR-2 766 106, le rapport en poids de l'agent dispersant aux nanotubes allant dans ce cas de préférence de 0,6:1 à 1,9:1.

Dans une autre forme d'exécution, l'agent dispersant peut être un homo- ou un copolymère de vinylpyrrolidone, le rapport en poids des nanotubes à l'agent dispersant allant dans ce cas de préférence de 0,1 à moins de 2.

Dans une autre forme d'exécution encore, la dispersion des nanotubes dans la matrice polymérique peut être améliorée en mettant ceux-ci en contact avec au moins un composé A qui peut être choisi parmi différents polymères, monomères, plastifiants, émulsionnants, agents de couplage et/ou acides carboxyliques, les deux composants (nanotubes et composé A) étant mélangés à l'état solide ou le mélange se présentant sous forme pulvérulente, éventuellement après élimination d'un ou plusieurs solvants.

La matrice polymérique utilisée selon l'invention peut par ailleurs contenir au moins un adjuvant choisi parmi les plastifiants, les stabilisants anti-oxygène, les stabilisants à la lumière, les colorants, les agents anti-choc, les agents antistatiques, les agents ignifugeants, les lubrifiants, et leurs mélanges.

De préférence, le rapport volumique des fibres continues à la matrice polymérique est supérieur ou égal à 50% et de préférence supérieur ou égal à 60%.

L'enrobage des fibres par la matrice polymérique peut se faire suivant différentes techniques, en fonction notamment de la forme physique de la matrice (pulvérulente ou plus ou moins liquide) et des fibres. Les fibres peuvent être utilisées telles quelles, sous forme fils unidirectionnels, ou après une étape de tissage, sous forme de tissu constitué d'un réseau bidirectionnel de fibres. L'enrobage des fibres est de préférence réalisé suivant un procédé d'imprégnation en lit fluidisé, dans lequel la matrice polymérique se trouve à l'état de poudre. Dans une variante moins préférée, l'enrobage des fibres peut se faire par passage dans un bain d'imprégnation contenant la matrice polymérique à l'état fondu. La matrice polymérique se solidifie alors autour des fibres pour former un produit semi-fini constitué d'un ruban de fibres pré-imprégné susceptible d'être ensuite bobiné ou d'un tissu de fibres pré-imprégné.

Ces semi-produits sont ensuite utilisés dans la fabrication de la pièce composite recherchée. Différents tissus de fibres pré-imprégnés, de composition identique ou différente, peuvent être empilés pour former une plaque ou un matériau stratifié, ou en variante soumis à un procédé de thermoformage. Les rubans de fibres peuvent être utilisés dans un procédé d'enroulement filamentaire permettant l'obtention de pièces creuses de forme quasi-illimitée. Dans ce dernier procédé, les fibres sont enroulées sur un mandrin ayant la forme de la pièce à fabriquer. Dans tous les cas, la fabrication de la pièce finie comprend une étape de consolidation de la matrice polymérique, qui est par exemple fondue localement pour créer des zones de fixation des fibres entre elles et solidariser les rubans de fibres dans le procédé d'enroulement filamentaire.

En variante encore, il est possible de préparer un film à partir de la matrice polymérique, notamment au moyen d'un procédé d'extrusion ou de calandrage, ledit film ayant par exemple une épaisseur d'environ 100 µm, puis de le placer entre deux mats de fibres, l'ensemble étant alors pressé à chaud pour permettre l'imprégnation des fibres et la fabrication du composite.

Les fibres composites obtenues comme décrit précédemment trouvent un intérêt dans diverses applications, en raison de leur module élevé (typiquement supérieur à 50 GPa) et de leur grande résistance, se traduisant par une contrainte à la rupture en traction supérieure à 200 MPa à 23°C.

La présente invention a plus précisément pour objet l'utilisation des fibres composites précités pour la fabrication de nez, d'ailes ou de carlingues de fusées ou d'avions ; d'armures de flexible off-shore ; d'éléments de carrosserie automobile, de châssis moteur ou de pièces support pour l'automobile ; ou encore d'éléments de charpentes dans le domaine du bâtiment ou des ponts est chaussées.

L'invention sera maintenant illustrée par l' exemple non limitatif suivante.

### EXEMPLES

### Exemple 1 : Procédé d'enroulement filamentaire utilisant des fibres de carbone

On mélange un homopolymère de VDF (Kynar^{®} 710 fourni par ARKEMA) avec un polymère fluoré greffé par l'anhydride maléique (Kynar^{®} ADX 1.20 fourni par ARKEMA), dans une proportion pondérale du PVDF au polymère fluoré greffé de 75 :25. Des nanotubes de carbone (NTC) (Graphistrength^{®} C100 fournis par AHKEMA) sont ensuite ajoutés à ce mélange en proportion de 2% en poids par rapport au poids du mélange dé polymères.

On obtient alors une matrice composite que l'on utilise pour enrober, dans un lit fluidisé une fibre continue de carbone, avant de transférer la fibre pré-imprégnée, via un système de guidage, vers une presse adaptée à la fabrication d'une plaque composite stratifiée. La mise sous presse a chaud (température d'environ 180-190°C) des tissus pré-imprégnés permet la consolidation du composite.

## Revendications

1. Procédé d'imprégnation de fibres continues, comprenant l'enrobage desdites fibres par une matrice polymérique comprenant : (a) au moins un polymère fluoré greffé par au moins une fonction polaire carboxylique et (b) éventuellement au moins un polymère fluoré non greffé.

2. Procédé selon la revendication 1, **caractérisé en ce que** lesdites fibres continues sont choisies parmi :
- les fibres de polymère étiré, à base notamment : de polyamide tel que le polyamide 6 (PA-6), le polyamide 11 (PA-11), le polyamide 12 (PA-12), le polyamide 6.6 (PA-6.6), le polyamide 4.6 (PA-4.6), le polyamide 6.10 (PA-6.10) ou le polyamide 6.12 (PA-6.12), de polyéthylène haute densité de polypropylène ou de polyester ;
- les fibres de carbone ;
- les fibres de verre, notamment de type E, R ou S2 ;
- les fibres d'aramide ;
- les fibres de bore ;
- les fibres de silice ;
- les fibres naturelles telles que le lin, le chanvre ou le sisal ; et
- leurs mélanges.

3. Procédé selon la revendication 1 ou 2, **caractérisé en ce que** le polymère fluoré greffé est susceptible d'être obtenu par greffage d'au moins un monomère polaire carboxylique sur un polymère fluoré.

4. Procédé selon la revendication 3, **caractérisé en ce que** le polymère fluoré comprend :
- le poly(fluorure de vinylidène) (PVDF), de préférence sous forme α,
- les copolymères de fluorure de vinylidène avec par exemple l'hexafluoropropylène (HFP), le chlorotrifluoroéthylène (CTFE), l'hexafluoropropylène (HFP), le trifluoroéthylène (VF3) et le tètratluoroéthylène (TFE),
- les homo- et copolymères de trifluoroéthylène (VF3),
- les copolymères fluoroéthylène / propylène (FEP),
- les copolymères d'éthylène avec le fluoroéthylène/propylène (FEP), le tétrafluoroéthylène (TFE), le perfluorométhylvinyl éther (PMVE), le chlorotrifluoroéthylène (CTFE) ou l'hexafluoropropylène (HFP), et
- leurs mélanges.

5. Procédé selon la revendication 4, **caractérisé en ce que** le polymère fluoré est un homopolymère de VDF (PVDF).

6. Procédé selon l'une quelconque des revendications 3 à 5, **caractérisé en ce que** le monomère polaire carboxylique est choisi parmi : les mono- et diacides carboxyliques insaturés ayant de 2 à 20 atomes de carbone, et en particulier de 4 à 10 atomes de carbone, tels que les acides acrylique, méthacrylique, maléique, fumarique, itaconique, citraconique, allylsuccinique, cyclohex-4-éne-1,2-dicarboxylique, 4-méthyl-cyclohex-4-ène-1,2-dicarboxylique, bicycle (2,2,1)hept-5-ène-2,3-dicarboxylique, x-méthyl bicyclo (2,2,1)hept-5-ène-2,3-dicarboxylique et undécylénique, ainsi que leurs anhydrides.

7. Procédé selon l'une quelconque des revendications 1 à 6, **caractérisé en ce que** le polymère fluoré non greffé est choisi parmi les polymères fluorés définis dans la revendication 4.

8. Procédé selon la revendication 7, **caractérisé en ce que** le polymère fluoré non greffé est un homopolymère de VDF (PVDF) ou un copolymère VDF/HFP.

9. Procédé selon l'une quelconque des revendications 1 à 8, **caractérisé en ce que** la matrice polymérique renferme en outre au moins un renfort choisi parmi : les nanotubes d'au moins un élément chimique choisi parmi les éléments des colonnes IIIa, IVa et Va du tableau périodique ; le noir de carbone ; les fibres de verre, de bore, de silice, d'aramide, de polymère étiré et/ou les fibres naturelles telles que le lin, le chanvre et/ou le sisal et leurs mélanges.

10. Procédé selon la revendication 9, **caractérisé en ce que** le renfort comprend des nanotubes constitués de nitrure de carbone, de nitrure de bore, de carbure de bore, de phosphure de bore, de nitrure de phosphore ou de boronitrure de carbone.

11. Procédé selon la revendication 10, **caractérisé en ce que** les nanotubes sont des nanotubes de carbone.

12. Procédé selon la revendication 10 ou 11, **caractérisé en ce que** les nanotubes représentent de 0,5 à 30% et de préférence de 0,5 à 10% du poids de la matrice polymérique.

13. Procédé selon l'une quelconque des revendications 1 à 12, **caractérisé en ce que** le rapport volumique des fibres continues à la matrice polymérique est supérieur ou égal à 50% et de préférence supérieur ou égal à 60%.

14. Fibres composites susceptibles d'être obtenues suivant le procédé selon l'une quelconque des revendications 1 à 13.

15. Utilisation des fibres composites selon la revendication 14 pour la fabrication de nez, d'ailes ou de carlingues de fusées ou d'avions ; d'armures de flexible off-shore ; d'éléments de carrosserie automobile, de châssis moteur ou de pièces support pour l'automobile ; ou d'éléments de charpentes dans le domaine du bâtiment ou des ponts et chaussées.

## Claims

1. Process for impregnating continuous fibres, comprising the coating of said fibres by a polymer matrix comprising: (a) at least one fluorinated polymer grafted by at least one carboxylic polar function and (b) possibly at least one ungrafted fluorinated polymer.

2. Process according to claim 1, **characterised in that** said continuous fibres are selected from among:
- Expanded polymer fibres, particularly based on: polyamide such as polyamide 6 (PA-6), polyamide 11 (PA-11), polyamide 12 (PA-12), polyamide 6.6 (PA-6.6), polyamide 4.6 (PA-4.6), polyamide 6.10 (PA-6.10) or polyamide 6.12 (PA-6.12), high density polyethylene, polypropylene or polyester;
- Carbon fibres;
- Glass fibres, particularly of the E, R or S2 type;
- Aramid fibres;
- Boron fibres;
- Silica fibres;
- Natural fibres such as flax, hemp or sisal; and
- Mixtures thereof.

3. Process according to claim 1 or 2, **characterised in that** the grafted fluorinated polymer can be obtained by grafting at least one carboxylic polar monomer onto a fluorinated polymer.

4. Process according to claim 3, **characterised in that** the fluorinated polymer includes:
- Poly(vinylidine fluoride) (PVDF), preferably in form α,
- Vinylidene fluoride copolymers with for example hexafluoropropylene (HFP), chlorotrifluoroethylene (CTFE), hexafluoropropylene (HFP), trifluoroethylene (VF3) and tetrafluoroethylene (TFE),
- Trifluoroethylene (VF3) homo- and copolymers,
- Fluoroethylene/propylene (FEP) copolymers,
- Ethylene copolymers with fluoroethylene/propylene (FEP), tetrafluoroethylene (TFE), perfluoromethylvinylether (PMVE), chlorotrifluoroethylene (CTFE), or hexafluoropropylene (HFP), and
- Mixtures thereof.

5. Process according to claim 4, **characterised in that** the fluorinated polymer is a VDF (PVDF) homopolymer.

6. Process according to any one of claims 3 to 5, **characterised in that** the carboxylic polar monomer is selected from among: the unsaturated carboxylic mono- and diacids with 2 to 20 carbon atoms, and in particular with 4 to 10 carbon atoms, such as acrylic, methacrylic, maleic, fumaric, itaconic, citraconic, allylsuccinic, cyclohex-4-ene-1,2-dicarboxylic, 4-methyl-cyclohex-4-ene-1,2-dicarboxylic, bicyclo (2,2,1)hept-5-ene-2,3-dicarboxylic, x-methyl bicyclo (2,2,1)hept-5-ene-2,3-dicarboxylic and undecylenic acids, as well as their anhydrides.

7. Process according to any one of claims 1 to 6, **characterised in that** the ungrafted fluorinated polymer is selected from among the fluorinated polymers defined in claim 4.

8. Process according to claim 7, **characterised in that** the ungrafted fluorinated polymer is a homopolymer of VDF (PVDF) or a VDF/HFP copolymer.

9. Process according to any one of claims 1 to 8, **characterised in that** the polymer matrix encloses moreover at least one support selected from among: nanotubes of at least one chemical element selected from among the elements of columns IIIa, IVa and Va of the periodic table; carbon black; glass, boron, silica, aramid or expanded polymer fibres or natural fibres such as flax, hemp and/or sisal and mixtures thereof.

10. Process according to claim 9, **characterised in that** the support comprises nanotubes constituted of carbon nitride, boron nitride, boron carbide, boron phosphide, phosphorus nitride or carbon boronitride.

11. Process according to claim 10, **characterised in that** the nanotubes are carbon nanotubes.

12. Process according to claim 10 or 11, **characterised in that** the nanotubes represent from 0.5 to 30% and preferably from 0.5 to 10% of the weight of the polymer matrix.

13. Process according to any one of claims 1 to 12, **characterised in that** the volumic ratio of continuous fibres to the polymer matrix is greater than or equal to 50% and preferably greater than or equal to 60%.

14. Composite fibres that can be obtained following the process according to any one of claims 1 to 13.

15. Use of composite fibres according to claim 14 for the manufacturing of the forward fuselage sections, wings or cockpits of rockets or aeroplanes; covering for offshore cargo hoses; elements of automobile bodywork, motor chassis or supporting parts for the automobile; or of elements of framed structures in the areas of construction or bridges and roadways.

## Patentansprüche

1. Verfahren zur Imprägnierung von Endlosfasern, das umfasst, die Fasern mit einer Polymermatrix zu umhüllen, die (a) mindestens ein fluoriertes Polymer, das mit mindestens einer polaren Carboxyfunktion gepfropft ist; und (b) gegebenenfalls mindestens ein nicht gepfropftes, fluoriertes Polymer enthält.

2. Verfahren nach Anspruch 1, **dadurch gekennzeichnet, dass** die Endlosfasern ausgewählt sind unter:
gezogenen Polymerfasern auf der Basis von insbesondere: Polyamid, wie Polyamid 6 (PA-6), Polyamid 11 (PA-11), Polyamid 12 (PA-12), Polyamid 6.6 (PA-6.6), Polyamid 4.6 (PA-4.6), Polyamid 6.10 (PA-6.10) oder Polyamid 6.12 (PA-6.12), Polyethylen hoher Dichte, Polypropylen oder Polyester;
• Kohlenstofffasern;
• Glasfasern, insbesondere von Typ E, R oder S2;
• Aramidfasern;
• Borfasern;
• Quarzglasfasern;
• natürlichen Fasern, wie Leinenfasern, Hanffasern oder Sisalfasern; und
• deren Gemischen.

3. Verfahren nach Anspruch 1 oder 2, **dadurch gekennzeichnet, dass** das gepfropfte fluorierte Polymer durch Pfropfen mindestens eines polaren Carboxymonomers auf ein fluoriertes Polymer erhalten werden kann.

4. Verfahren nach Anspruch 3, **dadurch gekennzeichnet, dass** das fluorierte Polymer umfasst:
- Poly(vinylidenfluorid) (PVDF), vorzugsweise in der α-Form,
- Copolymere von Vinylidenfluorid mit beispielsweise Hexafluorpropylen (HFP), Chlortrifluorethylen (CTFE), Hexafluorpropylen (HFP), Trifluorethylen (VF3) und Tetrafluorethylen (TFE),
- Homo- und Copolymere von Trifluorethylen (VF3),
- Fluorethylen/ Propylen (FEP)-Copolymere,
- Copolymere von Ethylen und Fluorethylen/Propylen (FEP), Tetrafluorethylen (TFE), Perfluormethylvinylether (PMVE), Chlortrifluorethylen (CTFE) oder Hexafluorpropylen (HFP), und
- deren Gemische.

5. Verfahren nach Anspruch 4, **dadurch gekennzeichnet, dass** das fluorierte Polymer ein Homopolymer von VDF (PVDF) ist.

6. Verfahren nach einem der Ansprüche 3 bis 5, **dadurch gekennzeichnet, dass** das polare Carboxymonomer ausgewählt ist unter:
ungesättigten Mono- und Dicarbonsäuren mit 2 bis 20 Kohlenstoffatomen und insbesondere 4 bis 10 Kohlenstoffatomen, wie Acrylsäure, Methacrylsäure, Maleinsäure, Fumarsäure, Itaconsäure, Citraconsäure, Allylbernsteinsäure, Cyclohex-4-en-1,2-dicarbonsäure, 4-Methyl-cyclohex-4-en-1,2-dicarbonsäure, Bicyclo(2.2.1)hept-5-en-1,2-dicarbonsäure, x-Methyl-bicyclo(2.2.1)hept-5-en-1,2-dicarbonsäure und Undecylensäure sowie deren Anhydride.

7. Verfahren nach einem der Ansprüche 1 bis 6, **dadurch gekennzeichnet, dass** das nicht gepfropfte, fluorierte Polymer unter den in Anspruch 4 definierten fluorierten Polymeren ausgewählt ist.

8. Verfahren nach Anspruch 7, **dadurch gekennzeichnet, dass** das nicht gepfropfte, fluorierte Polymer ein Homopolymer von VDF (PVDF) oder ein Copolymer VDF/HFP ist.

9. Verfahren nach einem der Ansprüche 1 bis 8, **dadurch gekennzeichnet, dass** die Polymermatrix ferner mindestens ein Verstärkungsmittel enthält, das ausgewählt ist unter: Nanoröhren mindestens eines chemischen Elements, das unter den Elementen der Spalten IIIa, IVa und Va des Periodensystems ausgewählt ist; Ruß; Glasfasern, Borfasern, Quarzglasfasern, Aramidfasern, Fasern eines gezogenen Polymers und/ oder natürlichen Fasern, wie Leinenfasern, Hanffasern und/oder Sisalfasern und deren Gemischen.

10. Verfahren nach Anspruch 9, **dadurch gekennzeichnet, dass** das Verstärkungsmittel Nanoröhren umfasst, die aus Carbonitrid, Bornitrid, Borcarbid, Borphosphid, Phosphornitrid oder Carbobornitrid gebildet sind.

11. Verfahren nach Anspruch 10, **dadurch gekennzeichnet, dass** die Nanoröhren Kohlenstoff-Nanoröhren sind.

12. Verfahren nach Anspruch 10 oder 11, **dadurch gekennzeichnet, dass** die Nanoröhren 0,5 bis 30 % und vorzugsweise 0,5 bis 10% des Gewichts der Polymermatrix ausmachen.

13. Verfahren nach einem der Ansprüche 1 bis 12, **dadurch gekennzeichnet, dass** das Volumenverhältnis der Endlosfasern und der Polymermatrix größer oder gleich 50 % und vorzugsweise größer oder gleich 60 % ist.

14. Verbundfasern, die nach dem Verfahren nach einem der Ansprüche 1 bis 13 erhältlich sind.

15. Verwendung der Verbundfasern nach Anspruch 14 für die Herstellung von Nasen, Tragflächen und Rümpfen von Raketen oder Flugzeugen; Bewehrungen von Off-Shore-Schläuchen; Elementen von Kraftfahrzeugkarosserien, Elementen von Motorchassis oder Teilen einer Aufhängung für Kraftfahrzeuge; oder Tragelementen auf dem Gebiet der Gebäude oder des Straßenbaus.
